# EUROPEAN PATENT APPLICATION

(11) **EP 4 397 602 A1**
(43) Date of publication of application: **10.07.2024**
(21) Application number: 22863679.1
(22) Date of filing: 08.09.2022
(51) Int. Cl.: B65G 1/04, B65D 19/24, B65D 19/44

(54) **STORAGE MECHANISM, STORAGE STACK AND STORAGE CENTER FOR LOCK PINS**

(30) Priority: 30.08.2021 CN 202122074519 U
(71) Applicant: Shanghai Zhenhua Heavy Industries Co., Ltd., Shanghai 200125 (CN); PSA International Pte Ltd, Singapore 117352 (SG)
(72) Inventor: CHEN, Jinqian, Shanghai 200125 (CN); XU, Wenbin, Shanghai 200125 (CN); CHEN, Yu, Shanghai 200125 (CN); ZHAO, Yongxin, Shanghai 200125 (CN); CAO, Le, Shanghai 200125 (CN); ZHU, Jianhua, Shanghai 200125 (CN); CHEN, Bo, Shanghai 200125 (CN); WANG, Meng, Shanghai 200125 (CN); JIANG, Sen, Shanghai 200125 (CN); FOO, Alvin, Singapore 117352 (SG); TAN, Tiam Her, Singapore 117352 (SG); TEO, Calvin, Singapore 117352 (SG); CHUA, Leng Wah, Singapore 117352 (SG); TAN, Wei Ming, Singapore 117352 (SG)
(74) Representative: Barker Brettell LLP
(86) International application number: PCT/CN2022/117719
(87) International publication number: WO 2023/030545

(57) **Abstract**

A storage mechanism for container fittings (4), used to attach to fittings to container corner castings provided between adjacent containers. The storage mechanism (1) comprises: a container fitting storage plate (10) provided with eight storage holes (11), two of which are spaced apart and provided on a center line of the container fitting storage plate (10) in a length direction of the container fitting storage plate (10), and the other six of which are divided into two rows and staggered with the two storage holes (11) provided on the center line, each row comprising three storage holes (11) spaced apart in the length direction, each of the storage holes having a same shape as that of an opening of a fitting to container corner castings, and used for storing the container fitting (4); and a conveying portion (12) provided on the container fitting storage plate (10), and used for being connected to an external device (3), such that the external device (3) conveys the storage mechanism (1) by the conveying portion (12). The storage mechanism can orderly store the container fitting with a large storage capacity to facilitate subsequent automated operations. Further disclosed are a storage stack (2) and a storage center.

## Description

### Technical field

The present disclosure relates to the technical field of containers, in particular to a storage mechanism for container fittings, a storage stack and a storage center.

### Background

In order to facilitate storage and transportation of containers, typically the containers are stacked on top of one another and secured via the (i.e., Twistlocks or Stacker cones) at each corner casting of the container. Each side of the container, referring to the top and bottom sides have a total of four corner castings respectively. The bottom side of the container is installed with container fittings at each corner casting by the workers at the wharf side, before it is transported to the vessel side by a quay crane spreader to stack on top of another container and lock the containers in the vertical direction.

When a container ship docks at a port terminal for container discharging, the port operator needs to remove the container fittings from the containers first before transferring the containers to the next location. In current port operations, this process of removing the container fittings from the container and unload to the gearbins remains manual and laborious. There are also a wide variety of container fittings with different geometries and dimensions in the market. Typically, one container ship would be equipped with one to three different types of container fittings and in large quantities; all stored together in the gearbins which can be very disorganized. Up to now, the removal and installation of the container fittings relied on manual labor, as they are able to differentiate and sort the container fittings from the gearbins easily. However, even as automated operations are becoming widespread, the disorderly placement of container fittings, coupled with a variety of individual placement postures, poses challenges to be sorted by an automated equipment.

### Summary

The objective of this present disclosure is to orderly store the container fittings removed from an automated production line to facilitate subsequent automated operations. The present disclosure provides a storage mechanism for container fittings, a storage stack, and a storage center, which can orderly store the container fittings and increase the storage capacity for the container fittings.

In order to solve the technical problem, the present disclosure discloses a storage mechanism for container fittings, used to attach to the fittings to container corner castings for securing the container stack onboard the vessel, wherein the storage mechanism comprises: a container fitting storage plate provided with eight storage holes, two of which are spaced apart and provided on a center line of the container fitting storage plate in a length direction of the container fitting storage plate, and the other six of which are divided into two rows and staggered with the two storage holes provided on the center line, each row comprising three storage holes spaced apart in the length direction, each of the storage holes having a same shape as that of an opening of a fitting to container corner castings and used for storing the container fitting; and a conveying portion provided on the container fitting storage plate, and used for being connected to an external device, such that the external device conveys the storage mechanism by the conveying portion.

Using the above technical solution, the container fittings can be placed on the storage mechanism in fixed postures to facilitate subsequent sorting of the container fittings, and they are no longer disorderly placed in the gearbins as described in the prior art. In addition, each container fitting storage plate is provided with eight storage holes, which increase the overall storage capacity for the container fittings.

According to another specific implementation of the present disclosure, the conveying portion is an opening.

According to another specific implementation of the present disclosure, the conveying portion is a plurality of openings provided at four corners of the container fitting storage plate, and the openings are staggered with the storage holes.

According to another specific implementation of the present disclosure, the container fitting storage plate is a stainless steel panel and has a cuboid shape.

According to another specific implementation of the present disclosure, a supporting portion is provided at a bottom of the container fitting storage plate, and is used for stacking two adjacent container fitting storage plates in a height direction, wherein an upper-tier container fitting storage plate is stacked on a lower-tier container fitting storage plate after being rotated by 180° relative to the lower-tier container fitting storage plate, and wherein the container fittings respectively stored on the two adjacent container fitting storage plates are staggered in the height direction.

According to another specific implementation of the present disclosure, the container fitting storage plate has a stack height of 154 mm, and the container fitting storage plate has a dimension of 920 mm in the length direction.

The present disclosure further comprises a storage stack for container fittings, comprising a plurality of storage mechanisms according to any one of the above implementations stacked in the height direction, wherein the container fitting storage plates of two adjacent storage mechanisms are stacked in the height direction, wherein an upper-tier container fitting storage plate is stacked on a lower-tier container fitting storage plate after being rotated by 180° relative to the lower-tier container fitting storage plate, and wherein the container fittings respectively stored on the two adjacent container fitting storage plates are staggered in the height direction and do not interfere with each other in the height direction.

The present disclosure further comprises a storage center for container fittings, comprising a plurality of stack positions, wherein one of the stack positions is an empty stack position, and wherein the other stack positions are used for placing the storage stack.

According to another specific implementation of the present disclosure, the storage center further comprises an external device used for being connected to the conveying portion, wherein the external device conveys the storage mechanism to a predetermined position for storing the container fittings on the container fitting storage plate, and wherein after the container fitting storage plate is filled up fully with the container fittings, the external device conveys the storage mechanism to the empty stack position.

According to another specific implementation of the present disclosure, six stack positions are provided around the external device, within its operating range.

According to another specific implementation of the present disclosure, the external device is a six-axis robotic arm.

### Brief description of drawings

FIG. 1 is a first top view of a storage mechanism for container fittings according to an embodiment of the present disclosure;
FIG. 2 is a first side view of a storage stack for container fittings according to an embodiment of the present disclosure;
FIG. 3 is a first structural schematic view of a storage center of the storage mechanism for container fittings according to an embodiment of the present disclosure;
FIG. 4 is a second structural schematic view of the storage center of the storage mechanism for container fittings according to an embodiment of the present disclosure;
FIG. 5 is a second top view of the storage mechanism for container fittings according to an embodiment of the present disclosure;
FIG. 6 is a second side view of the storage stack for container fittings according to an embodiment of the present disclosure;
FIG. 7 is a third structural schematic view of the storage center of the storage mechanism for container fittings according to an embodiment of the present disclosure.

### Detailed description

The following specific embodiments illustrate implementations of the present disclosure, and a person skilled in the art can easily understand other advantages and effects of the present disclosure from the content disclosed in this description. Although the description of the present disclosure is introduced with reference to the preferred embodiments, this does not mean that the features of the present disclosure are limited to these embodiments. On the contrary, the purpose of introducing the present disclosure with reference to the embodiments is to cover other options or modifications that may be extended based on the claims of the present disclosure. In order to provide an in-depth understanding of the present disclosure, the following description contains many specific details. The present disclosure can also be implemented without using these details. In addition, in order to avoid confusion or obscuring the focus of the present disclosure, some specific details are omitted in the description. It should be noted that the embodiments of the present disclosure and the features in the embodiments can be combined with each other if there is no conflict.

It should be noted that in this description, similar reference numerals and letters indicate similar items in the following drawings. Therefore, once a certain item is defined in one drawing, there is no need to further define and explain the item in the subsequent drawings.

In order to make the objective, technical solutions and advantages of the present disclosure clearer, the implementations of the present disclosure are described in detail with reference to the accompanying drawings.

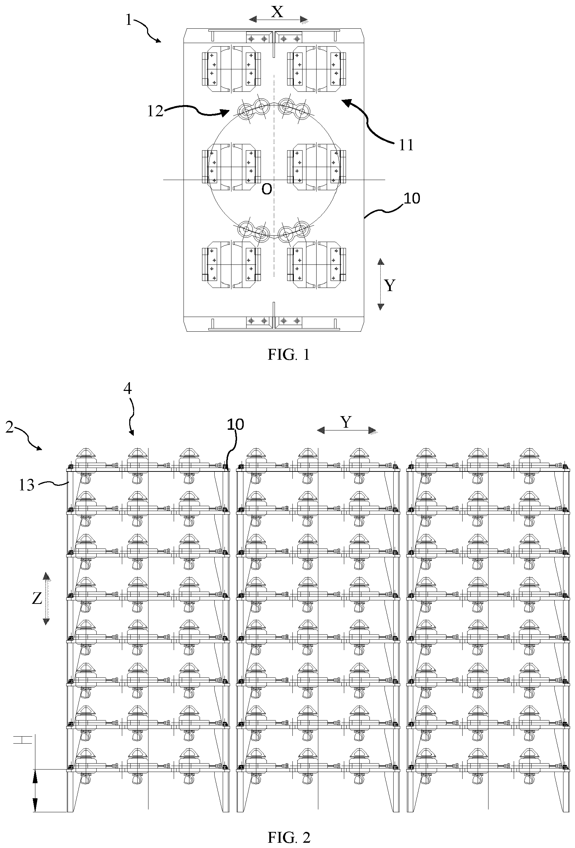

Referring to FIG. 1 to FIG. 4, the present disclosure provides a storage mechanism 1 for container fittings 4. The container fittings 4 (referring to FIG. 2) are used to attach to fittings to container corner castings (not shown in the figures, that are, the places where the container fittings 4 are installed) provided between adjacent containers. The storage mechanism 1 for the container fittings 4 comprises: a container fitting storage plate 10. Exemplarily, the container fitting storage plate 10 is a stainless steel panel and has a cuboid shape. However, the material and shape of the container fitting storage plate 10 are not limited to these, for example, it can also be a cube-shaped aluminum alloy panel. The container fitting storage plate 10 of the present disclosure is provided with a plurality of storage holes 11, each of which having a same shape as that of an opening of a fitting to container corner castings and used for storing the container fittings 4. "The same shape" comprises an identical or similar shape. Since each of the storage holes 11 has the same shape as that of the fitting to container corner castings, the container fittings 4 removed from the container can be placed on the storage holes 11.

Therefore, container fittings 4 can be placed on the storage mechanism 1 in fixed postures, and this facilitates sorting of the container fittings 4 in subsequent operations, and the container fittings are no longer disorderly placed in the gearbins as in the prior art.

In addition, the storage mechanism 1 of the present disclosure further comprises a conveying portion 12, and the conveying portion 12 is provided on the container fitting storage plate 10 and used for being connected to an external device 3, so that the external device 3 can convey the storage mechanism 1 by the conveying portion 12. Exemplarily, the conveying portion 12 is an opening or a handle. FIG. 1 and FIG. 2 show that the conveying portion 12 is an opening. The present disclosure is not limited to this. The design of the opening or handle on the container fitting storage plate 10 depends on the conveying tool style of the external device 3 (that is, a conveying mechanism). In some possible implementations, the conveying portion 12 may be in other forms, such as a magnet structure, and the external device 3 absorbs the storage mechanism 1 of the container fittings 4 by the magnet structure to convey the storage mechanism 1 of the container fittings 4.

Exemplarily, there are a plurality of openings or handles located on a same circumference. The center of the circumference (the point O shown in FIG. 1) coincides with the center of the container fitting storage plate 10, and the openings or handles do not interfere with the storage holes 11 and the container fittings 4. As shown in FIG. 1, four openings are symmetrically provided in the center circumferential position of the container fitting storage plate 10. The number of the openings is not limited to this, and a corresponding option can be made according to the conveying tool style of the external device 3.

In some possible implementations, referring to FIG. 1, the container fitting storage plate 10 of the present disclosure is provided with two rows of storage holes spaced apart in the width direction of the container fitting storage plate 10 (the X direction shown in FIG. 1), each row extending in the length direction of the container fitting storage plate 10 (the Y direction shown in FIG. 1) and comprising three storage holes 11 spaced apart in the length direction. This is equivalent to that six storage holes 11 are provided on the container fitting storage plate 10. The three storage holes 11 in each row of storage holes are provided at equal intervals, so that the six storage holes 11 are orderly provided, ensuring that the container fittings 4 can be placed in fixed postures. Providing six storage holes can improve the storage efficiency of the container fittings 4.

However, in this present disclosure, there is no limitation to the number of storage holes 11, and the corresponding option and design can be made according to the storage requirements of time. For example, eight storage holes 11 or ten storage holes 11 are provided on each container fitting storage plate 10.

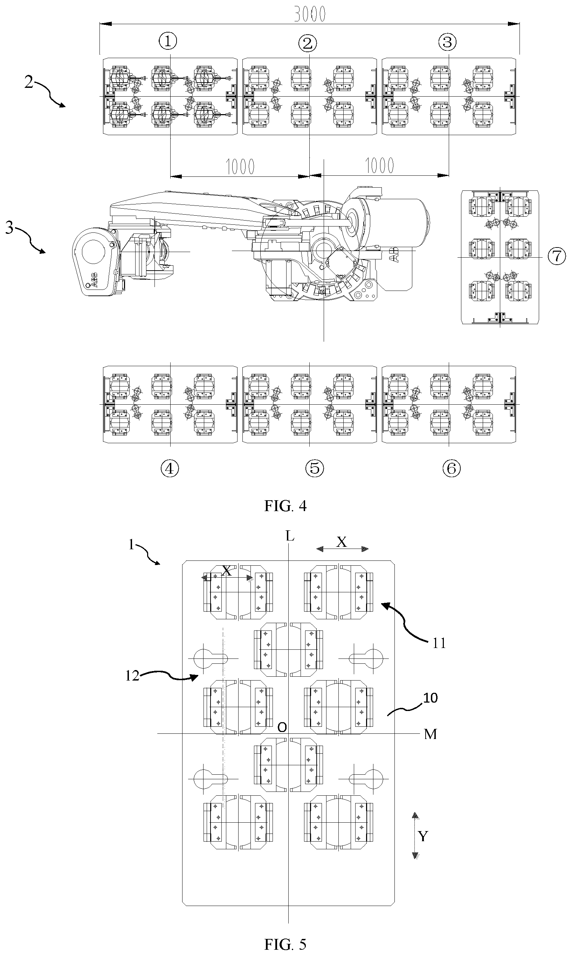

In some possible implementations, referring to FIG. 5 to FIG. 7, each container fitting storage plate 10 is provided with eight storage holes 11, two of which are spaced apart and provided on the center line of the container fitting storage plate 10 (L shown in FIG. 5) in the length direction of the container fitting storage plate 10, and the other six of which are divided into two rows and staggered with the two storage holes provided on the center line L, each row comprising three storage holes spaced apart in the length direction. The intersection point of the center line L in the length direction of the container fitting storage plate 10 and its center line M in the width direction is the center of the container fitting storage plate 10 (the point O shown in FIG. 5). As eight storage holes 11 are provided on each container fitting storage plate 10, the capacity of the container fitting storage plate 10 is increased.

When eight storage holes 11 are provided on each container fitting storage plate 10, the conveying portion 12 is an opening, and there is a plurality of openings. Referring to FIG. 5, a plurality of openings are provided at four corners of the container fitting storage plate 10, and are staggered with the storage holes 11. FIG. 5 shows four openings respectively located between adjacent storage holes 11 to fully utilize the space on the container fitting storage plate 10, while not affecting the arrangement of the storage holes 11 on the container fitting storage plate 10.

Referring to FIG. 2, a supporting portion 13 is provided at the bottom of the container fitting storage plate 10, and is used for stacking two adjacent container fitting storage plates 10 in the height direction (the Z direction shown in FIG. 2). The container fittings 4 respectively stored on the two adjacent container fitting storage plates 10 correspond to each other in the height direction. That is, the container fittings 4 respectively stored on the two adjacent container fitting storage plates 10 are aligned in the height direction. A plurality of container fitting storage plates 10 can be neatly stacked to form a plurality of storage stacks 2 around an external device 3 described later. One or more groups of supporting portions 13 may be designed to allow the stacking between the container fitting storage plates 10.

As shown in FIG. 2, the present disclosure provides a storage stack 2 of container fittings 4, comprising: a plurality of storage mechanisms 1 described in any of the above embodiments and stacked in the height direction (the Z direction shown in FIG. 2), and the container fitting storage plates 10 of two adjacent storage mechanisms 1 are stacked in the height direction.

Referring to FIG. 1 and FIG. 2, when the container fitting storage plate 10 is provided with two rows of storage holes, the container fittings 4 respectively stored on the two adjacent container fitting storage plates 10 correspond to each other in the height direction. That is, the container fittings 4 respectively stored on the two adjacent container fitting storage plates 10 are aligned in the height direction.

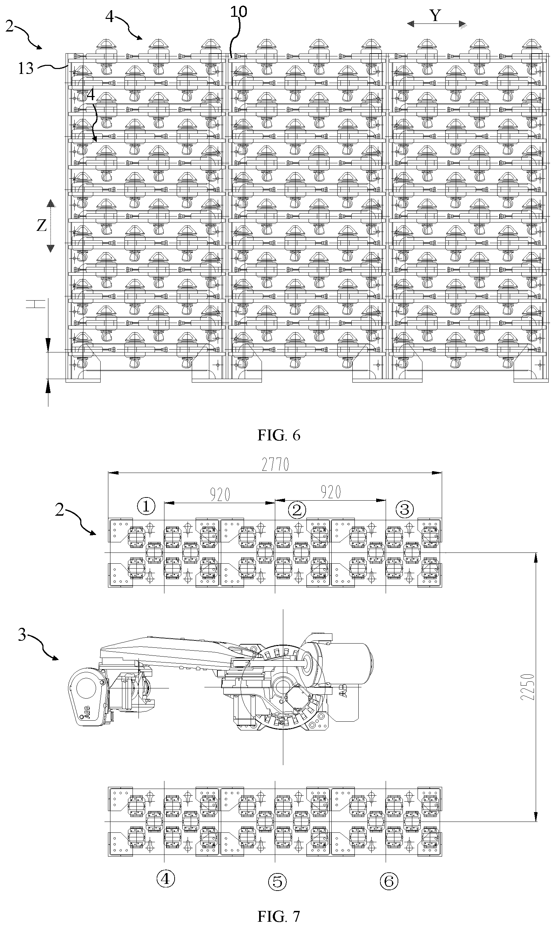

Referring to FIG. 5 and FIG. 6, when each container fitting storage plate 10 is provided with eight storage holes 11, an upper-tier container fitting storage plate 10 is stacked on a lower-tier container fitting storage plate 10 after being rotated by 180° relative to the lower-tier container fitting storage plate 10, wherein the container fittings 4 respectively stored on the two adjacent container fitting storage plates 10 are staggered in the height direction. The two adjacent tiers of container fitting storage plates 10 face opposite directions.

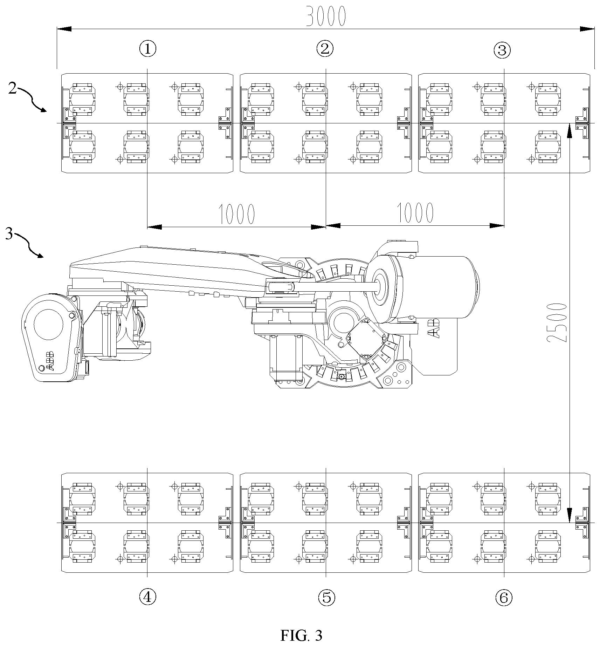

As shown in FIG. 3, the present disclosure further provides a storage center for container fittings 4, comprising a plurality of stack positions, one of the stack positions is an empty stack position, and the other stack positions are used for placing the storage stack 2 described in the above embodiment. The storage center further comprises an external device 3 used for being connected to the conveying portion 12. The external device 3 conveys the storage mechanism 1 to a predetermined position for storing the container fittings on the container fitting storage plate 10, and after the container fitting storage plate 10 is filled up fully with the container fittings 4, the external device 3 conveys the storage mechanism 1 to the empty stack position.

As shown in FIG. 2 and FIG. 3, a plurality of container fitting storage plates 10 can be stacked neatly to form a plurality of stacks around the external device 3. As shown in FIG. 2 and FIG. 3, there are six stack positions (① to ⑥ shown in FIG. 3) around the external device 3 of the container fitting storage plate 10. Twelve container fitting storage plates 10 are stacked in each of the stack positions, and a total of seventy-two container fitting storage plates 10 can be stored. Dimensions of the container fitting storage plates 10 are strictly uniform. However, the present disclosure is not limited to this. The corresponding option can be made according to the actual storage requirements. For example, in some possible embodiments, ten container fitting storage plates 10 are stacked in each of the stack positions.

Exemplarily, the external device 3 currently uses an industrial general six-axis robotic arm, but it is not limited to this. Any structures that can implement conveying belong to the protection scope of the present disclosure. For example, the external device is a crane, which has function of moving in six directions: front and rear, left and right, and high and low.

Exemplarily, five of the six stack positions is filled up fully with container fitting storage plates 10, and the other stack position (for example, ⑥ shown in the figures) is empty and not filled up fully with container fitting storage plates 10. In this way, the six stacking positions can be flexibly dispatched to achieve automated operations. Due to the neat stacking of the container fitting storage plates 10, spatial location of each of the container fitting storage plates 10 can be calculated according to the mechanical dimension of the container fitting storage plate 10, and can be directly input into the control system of the external device 3 to form a database, which can carry out automated operations and improve efficiency of the operations.

Exemplarily, referring to FIG. 1 and FIG. 2, when the container fitting storage plate 10 is provided with two rows of storage holes, the stack height (H shown in FIG. 2) of the container fitting storage plate 10 of the present disclosure is 240 mm to 260 mm, comprising 240 mm and 260 mm, for example, 250mm. This dimension enables the container fitting storage plates 10 to be stacked directly when being stacked in the height direction. The container fittings 4 respectively stored on the two adjacent container fitting storage plates 10 are aligned in the height direction, and do not interfere with each other since the container fittings are placed on the container fitting storage plate 10.

Referring to FIG. 5 and FIG. 6, when each container fitting storage plate 10 is provided with eight storage holes 11, the container fitting storage plate 10 of the present disclosure has a stack height (H shown in FIG. 6) of 154 mm.

Referring to FIG. 1 and FIG. 2, when the container fitting storage plate 10 is provided with two rows of storage holes, as shown in FIG. 3, the container fitting storage plate 10 in the present disclosure has a dimension of 900 mm to 1100 mm in the length direction, comprising 900 mm and 1100 mm. Taking the center point of the base of the external device 3 for the container fitting storage plate 10 as a coordinate origin, each of the container fitting storage plates 10 (its center position) can have three-dimensional coordinates that are regular between each other, facilitating the operation of the conveying mechanism.

Referring to FIG. 5 and FIG. 6, when each container fitting storage plate 10 is provided with eight storage holes 11, as shown in FIG. 7, the container fitting storage plate 10 of the present disclosure has a dimension of 920 mm in the length direction.

It can be seen from FIG. 3 that the single container fitting storage plate 10 has a height of 200 mm, and has a width of 1000 mm, and then a programmer can easily obtain the coordinates of each container fitting storage plate 10. Assuming that the container fitting storage plate 10 provided at the bottom of the most marginal stack position (for example, ① as shown in the figure) is plate No.1, the horizontal position is 0 mm, the front-rear position is 0 mm, and the height position is 0 mm, for the position of the plate No.2 (that is, the container fitting storage plate 10 above the plate No.1), the horizontal position is 0 mm, the front-rear position is 0 mm, and the height position is 200 mm. For the plate No.11 (that is, the container fitting storage plate 10 at the bottom of the stack position adjacent to the right side of the plate No.1), the horizontal position is 1000 mm, the front-rear position is 0 mm, and the height position is 0 mm. For the plate No.31 (that is, the container fitting storage plate 10 at the bottom of the stack position opposite to the plate No.1), the horizontal position is 0 mm, the front-rear position is 2500 mm, and the height position is 0 mm.

It can be seen from FIG. 7 that the single container fitting storage plate 10 has a width of 920mm. When its height is 158mm, the programmer can easily obtain the coordinates of each container fitting storage plate 10. Assuming that the container fitting storage plate 10 at the bottom of the most marginal stack position (for example, ① as shown in the figure) is plate No.1, the horizontal position is 0 mm, the front-rear position is 0 mm, and the height position is 0 mm, for the position of the plate No.2 (that is, the container fitting storage plate 10 above the plate No.1), the horizontal position is 0 mm, the front-rear position is 0 mm, and the height position is 158 mm. For the plate No.11 (that is, the container fitting storage plate 10 at the bottom of the stack position adjacent to the right side of the plate No.1), the horizontal position is 920 mm, the front-rear position is 0 mm, and the height position is 0 mm. For the plate No.31 (that is, the container fitting storage plate 10 at the bottom of the stack position opposite to the plate No.1), the horizontal position is 0 mm, the front-rear position is 2250 mm, and the height position is 0 mm.

The center positions and stack heights of the six stack positions fulfill the operating radius of the external device 3. Theoretically, an increase in the number of external devices 3 or an increase in the operating radius can lead to an increase in the number of stack positions. When the six stack positions are in operation, one of the stack positions (for example, ⑥ as shown in the figures) is empty, no container fitting storage plate 10 is placed on this stack position, and the other five stack positions are filled up fully with container fitting storage plates 10. Assuming that five stack positions are filled up fully with container fitting storage plates (for example, twelve container fitting storage plates 10 are stacked in each of the stack positions), and the container fitting storage plates are all empty plates (no container fitting 4 is stored on each of the container fitting storage plates 10), then when the external device 3 brings a container fitting storage plate 10 filled up fully with container fittings 4 from the production line, it needs to be placed at the bottom of the empty stack position firstly, and then an empty plate (an empty container fitting storage plate 10) is retrieved from the adjacent full stack position to be placed on the production line. This process goes back and forth for twelve times. In this way, the full stack (the stack position filled up fully with the stacked container fitting storage plates 10) becomes an empty stack (a stack position wherein no container fitting storage plate 10 is stacked), and the empty stack becomes a full stack filled up fully with the container fitting storage plates 10 (the container fitting storage plate 10 is filled up fully with the stored container fittings 4).

The advantage of this solution is that empty plates, full plates, or half full plates from the production line can be managed in time. In the storage mechanism 1, not only the position of each of the container fitting storage plates 10 are known, but also the number and types of container fittings 4 on each of the container fitting storage plates 10 can be collected to facilitate automated operations.

The number of stack positions in the present disclosure is not limited to six. In some possible implementations, referring to FIG. 4, seven stack positions are provided around the external device 3 (① to ⑦ as shown in FIG. 4), within its operating range. Similarly, one of these stack positions is reserved as an empty stack. For example, six of the seven stack positions are filled up fully with the stacked container fitting storage plates 10, and the other stack position (for example, as shown in ⑦ is an empty stack position. For the process of stacking the container fitting storage plates 10, the related description of the above six stack positions can be referred. Details are not described herein.

In some possible implementations, when the external device 3 uses a crane, the number of stack positions can be increased based on the length of the crane track.

Although the present disclosure has been illustrated and described by referring to certain preferred embodiments of the present disclosure, a person skilled in the art should understand that the above content is a further detailed description of the present disclosure with reference to specific embodiments, and it cannot be considered that the specific implementations of the present disclosure are only limited to these descriptions. A person skilled in the art can make various changes in forms and details, comprising some simple deductions or substitutions, without deviating from the essence and scope of the present disclosure.

## Claims

1. A storage mechanism for container fittings, used to attach to fittings to container corner castings provided between adjacent containers, wherein the storage mechanism comprises:
a container fitting storage plate provided with eight storage holes, two of which are spaced apart and provided on a center line of the container fitting storage plate in a length direction of the container fitting storage plate, and the other six of which are divided into two rows and staggered with the two storage holes provided on the center line, each row comprising three storage holes spaced apart in the length direction, each of the storage holes having a same shape as that of an opening of a fitting to container corner castings, and used for storing the container fittings; and
a conveying portion provided on the container fitting storage plate, and used for being connected to an external device, such that the external device conveys the storage mechanism by the conveying portion.

2. The storage mechanism according to claim 1, wherein the conveying portion is an opening.

3. The storage mechanism according to claim 2, wherein the conveying portion is a plurality of openings provided at four corners of the container fitting storage plate, and wherein the openings are staggered with the storage holes.

4. The storage mechanism according to claim 1, wherein the container fitting storage plate is a stainless steel panel and has a cuboid shape.

5. The storage mechanism according to any one of claims 1 to 4, wherein a supporting portion is provided at a bottom of the container fitting storage plate, and is used for stacking two adjacent container fitting storage plates in a height direction, wherein an upper-tier container fitting storage plate is stacked on a lower-tier container fitting storage plate after being rotated by 180° relative to the lower-tier container fitting storage plate, and wherein the container fittings respectively stored on the two adjacent container fitting storage plates are staggered in the height direction.

6. The storage mechanism according to claim 5, wherein the container fitting storage plate has a stack height of 154 mm, and wherein the container fitting storage plate has a dimension of 920 mm in the length direction.

7. A storage stack for container fittings, comprising a plurality of storage mechanisms according to any one of claims 1 to 6 stacked in the height direction, wherein the container fitting storage plates of two adjacent storage mechanisms are stacked in the height direction, wherein an upper-tier container fitting storage plate is stacked on a lower-tier container fitting storage plate after being rotated by 180° relative to the lower-tier container fitting storage plate, and wherein the container fittings respectively stored on the two adjacent container fitting storage plates are staggered in the height direction and do not interfere with each other in the height direction.

8. A storage center for container fittings, comprising a plurality of stack positions, wherein one of the stack positions is an empty stack position, and wherein the other stack positions are used for placing the storage stack according to claim 7.

9. The storage center according to claim 8, further comprising an external device used for being connected to the conveying portion, wherein the external device conveys the storage mechanism to a predetermined position for storing the container fittings on the container fitting storage plate, and wherein after the container fitting storage plate is filled up fully with the container fittings, the external device conveys the storage mechanism to the empty stack position.

10. The storage center according to claim 9, wherein six stack positions are provided around the external device.

11. The storage center according to claim 10, wherein the external device is a six-axis robotic arm.
